# EUROPÄISCHE PATENTANMELDUNG

(11) **EP 1 538 313 A1**
(43) Veröffentlichungstag der Anmeldung: **08.06.2005**
(21) Anmeldenummer: 04026984.7
(22) Anmeldetag: 12.11.2004
(51) Int. Cl.: F01N 3/28, B01J 35/04

(54) **Trägerkörper für einen Katalysator**

(30) Priorität: 06.12.2003 DE 10357117
(71) Anmelder: DaimlerChrysler AG, 70567 Stuttgart (DE)
(72) Erfinder: Schmidt, Jürgen, Dr., 75417 Mühlacker (DE)

(57) **Zusammenfassung**

Ein Trägerkörper (1) für einen Katalysator (2), welcher aus einem keramischen Material besteht und Stege (3) und zwischen den Stegen (3) gebildete Kanäle (4) aufweist, weist zumindest in seinem oberflächennahen Bereich (6) eine Porosität von mehr als 35 % auf.

## Beschreibung

Die Erfindung betrifft einen Trägerkörper für einen Katalysator nach der im Oberbegriff von Anspruch 1 näher definierten Art. Des weiteren betrifft die Erfindung einen Katalysator.

Aus dem allgemeinen Stand der Technik sind Katalysatoren bekannt, welche keramische Trägerkörper aufweisen, die der katalytisch aktiven Komponente, meist der als Washcoat bezeichneten Beschichtung, Halt geben. Der Trägerkörper weist eine gleichmäßige Porosität, die meist zwischen 20 und 30 % beträgt, sowie Öffnungen bzw. Kanäle auf, die dem Abgas zur Durchströmung zur Verfügung stehen und den sogenannten freien Kanalquerschnitt oder hydraulischen Durchmesser bilden. Durch das katalytisch aktive Material wird dieser freie Querschnitt reduziert, da das katalytisch aktive Material direkt auf den Trägerkörper aufgebracht wird.

Problematisch hierbei ist, dass durch die Verringerung des freien Querschnitts der von dem Katalysator erzeugte Gegendruck sehr stark erhöht wird, was sich nachteilig auf die Leistung einer Brennkraftmaschine auswirkt, der der Katalysator nachgeschaltet ist.

Gemäß einem weiteren allgemeinen Stand der Technik wird versucht, diesem Problem dadurch entgegen zu treten, dass die Wandstärken des Trägerkörpers verringert werden, um die Öffnungen zu vergrößern und somit einen größeren freien Querschnitt zu erzielen. Diese Verringerung der Wandstärke führt jedoch zu einer Verringerung der statischen Festigkeit des Trägerkörpers und somit des gesamten Katalysators, so dass dies Möglichkeit nur äußerst begrenzt genutzt werden kann.

Ein Beispiel für einen Trägerkörper eines Katalysators, bei dem die Porosität 20 % oder weniger beträgt, ist der EP 1 188 480 A1 zu entnehmen.

Es ist daher Aufgabe der vorliegenden Erfindung, einen Trägerkörper für einen Katalysator zu schaffen, bei dem mit einfachen Mitteln und ohne Gefährdung der statischen Festigkeit des Trägerkörpers der freie Querschnitt vergrößert werden kann.

Erfindungsgemäß wird diese Aufgabe durch die in Anspruch 1 genannten Merkmale gelöst.

Durch die erhöhte Porosität des erfindungsgemäßen Trägerkörpers kann die zur Bildung eines Katalysators auf denselben aufgebrachte katalytisch aktive Beschichtung sehr viel stärker bzw. nahezu vollständig in den Trägerkörper eindringen, so dass der freie Querschnitt der Öffnungen bzw. Kanäle des Trägerkörpers nur unwesentlich verringert wird und somit erheblich größer als bei bekannten Lösungen ist. Dies führt dazu, dass bei gleichem Volumenstrom ein erheblich geringerer Gegendruck erzeugt wird, was die Leistungsentfaltung einer Brennkraftmaschine, der ein mit dem erfindungsgemäßen Trägerkörper ausgestatteter Katalysator nachgeschaltet ist, entsprechend verbessert.

Ein weiterer Vorteil der erfindungsgemäßen Lösung besteht darin, dass durch die porösere Oberfläche des Trägerkörpers die Adhäsion der Beschichtung verbessert und die Gefahr der Erosion verringert wird, da durch die Vergrößerung des freien Querschnitts der Kanäle ein berührungsfreies Durchströmen von Fremdkörpern fördert. Der erfindungsgemäße Trägerkörper weist darüber hinaus eine geringere Masse auf, die zur schnelleren Aufheizung eines damit gebildeten Katalysators beiträgt. Schließlich wird durch die Vergrößerung des freien Querschnitts der Kanäle auch die wirksame Oberfläche des Trägerkörpers und somit auch eines Katalysators vergrößert, wodurch bei gleicher Reinigungsleistung sogar kleinere Katalysatoren verwendet werden können.

Als für die praktische Anwendung besonders vorteilhaft wird es angesehen, wenn die Porosität zwischen 40 - 60 % beträgt.

Ein Katalysator mit einem erfindungsgemäßen Trägerkörper ist in Anspruch 6 angegeben.

Nachfolgend ist ein Ausführungsbeispiel der Erfindung anhand der Zeichnung prinzipmäßig dargestellt.

Dabei zeigen:
- Fig. 1: einen Schnitt durch einen erfindungsgemäßen Trägerkörper für einen Katalysator; und
- Fig. 2: einen Schnitt durch einen Trägerkörper gemäß dem Stand der Technik.

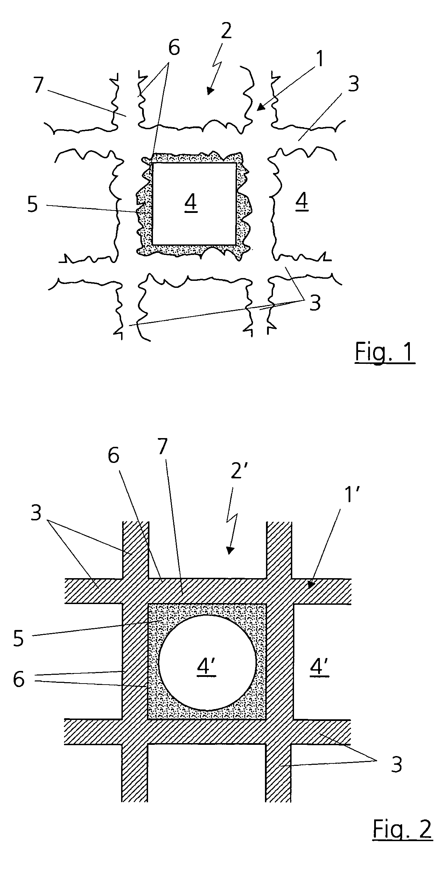

Fig. 1 zeigt einen äußerst kleinen Ausschnitt eines Trägerkörpers 1 für einen in seiner Gesamtheit nicht dargestellten Katalysator 2. Der aus einem keramischen Material bestehende Trägerkörper 1 weist in Längs- und in Querrichtung verlaufende Stege 3 auf, zwischen welchen Öffnungen bzw. Kanäle 4 gebildet sind. Im vorliegenden Fall ist lediglich einer der Kanäle 4 vollständig zu erkennen, der Trägerkörper 1 weist jedoch, wie dies an sich bekannt ist, eine Vielzahl dieser Kanäle 4 auf.

Die Kanäle 4 sind mit einer katalytisch aktiven Beschichtung 5, nämlich einem sogenannten meist edelmetallhaltigen Washcoat, versehen, wobei im vorliegenden Fall lediglich die katalytisch aktive Beschichtung 5 des in der Mitte der Darstellung erkennbaren Kanals 4 dargestellt ist.

Der Trägerkörper 1 weist zumindest in einem oberflächennahen Bereich 6 eine Porosität von mehr als 35 % auf. Dies bedeutet, dass in dem oberflächennahen Bereich 6 65 % des Volumens von dem keramischen Material des Trägerkörpers 1 eingenommen werden und dass 35 % durch Luft gebildet sind. Insbesondere beträgt die Porosität in dem oberflächennahen Bereich 6 zwischen 40 bis 60 %. Im dargestellten Ausführungsbeispiel ist die Porosität in dem oberflächennahen Bereich 6 höher als in einem inneren Bereich 7 des Trägerkörpers 1. Dadurch, dass in dem oberflächennahen Bereich 6 die Porosität höher ist als in dem inneren Bereich 7, kann die gesamte bzw. durchschnittliche Porosität des Trägerkörpers 1 auch 35 % oder weniger betragen.

Hierbei wird als oberflächennaher Bereich 6 derjenige Bereich angesehen, der sich von der äußeren Oberfläche des Trägerkörpers 1 zwischen 0,05 und 0,2 mm, vorzugsweise ca. 0,1 mm, in Richtung des inneren Bereichs 7 des Trägerkörpers 1 erstreckt. Bei einer ungefähren Wanddicke von 1 mm der Stege 3 betrüge die Dicke des inneren Bereichs 7 somit zwischen 0,6 - 0,9 mm betragen, vorzugsweise ca. 0,8 mm. Bei einer anderen Wanddicke der Stege 3 könnten sich selbstverständlich auch andere Abmessungen des oberflächennahen Bereichs 6 und des inneren Bereichs 7 ergeben.

Durch die höhere Porosität des Trägerkörpers 1 kann die katalytisch aktive Beschichtung 5 tiefer bzw. vermehrt in den Trägerkörper 1 eindringen als dies bislang bekannt war. Somit wird eine Vergrößerung des freien Querschnitts der Kanäle 4 erreicht. Des weiteren ergibt sich eine bessere Adhäsion der Beschichtung 5 an dem Trägerkörper 1 sowie, zumindest in dem Fall, in dem der Trägerkörper 1 insgesamt eine geringere Porosität aufweist, eine Verringerung der Masse des Trägerkörpers 1.

In einer nicht dargestellten Ausführungsform kann der gesamte Trägerkörper 1 im wesentlichen dieselbe Porosität, nämlich mehr als 35 %, vorzugsweise zwischen 40 - 60 %, aufweisen.

In Fig. 2 ist ein Trägerkörper 1' für einen Katalysator 2' nach dem Stand der Technik dargestellt. Auch dieser Trägerkörper 1' weist Stege 3' und dadurch gebildete Kanäle 4' auf. Da der Trägerkörper 1' jedoch eine Porosität von ca. 20 - 30 % aufweist, kann die katalytisch aktive Beschichtung 5' weniger stark in den Trägerkörper 1' eindringen, so dass sie sich an dem oberflächennahen Bereich 6' aufbaut und den freien Querschnitt der Kanäle 4' verringert. Die Folge ist ein erhöhter Gegendruck und damit eine schlechtere Leistungsentfaltung einer mit dem Katalysator 2' ausgestatteten, nicht dargestellten Brennkraftmaschine.

## Patentansprüche

1. Trägerkörper für einen Katalysator, welcher aus einem keramischen Material besteht und Stege und zwischen den Stegen gebildete Kanäle aufweist,
**dadurch gekennzeichnet,**
**dass** der Trägerkörper (1) zumindest in seinem oberflächennahen Bereich (6) eine Porosität von mehr als 35 % aufweist.

2. Trägerkörper nach Anspruch 1,
**dadurch gekennzeichnet,**
**dass** die Porosität zwischen 40 - 60 % beträgt.

3. Trägerkörper nach Anspruch 1 oder 2,
**dadurch gekennzeichnet,**
**dass** die Porosität in dem oberflächennahen Bereich (6) höher als in einem inneren Bereich (7) ist.

4. Trägerkörper nach Anspruch 1 oder 2,
**dadurch gekennzeichnet,**
**dass** der gesamte Trägerkörper (1) über seinen gesamten Querschnitt im wesentlichen dieselbe Porosität aufweist.

5. Trägerkörper nach einem der Ansprüche 1 bis 4,
**dadurch gekennzeichnet,**
**dass** der oberflächennahe Bereich (6) eine Breite von 0,05 - 0,2 mm aufweist.

6. Katalysator mit einem Trägerkörper nach einem der Ansprüche 1 bis 5, wobei der Trägerkörper (1) mit einer katalytisch aktiven Beschichtung (5) versehen ist.
